# EUROPEAN PATENT APPLICATION

(11) **EP 4 618 298 A1**
(43) Date of publication of application: **17.09.2025**
(21) Application number: 24898944.4
(22) Date of filing: 07.03.2024
(51) Int. Cl.: H01M 50/503

(54) **CONNECTING BAR, BATTERY MODULE, AND BATTERY PACK**

(30) Priority: 15.12.2023 CN 202323444551 U
(71) Applicant: Eve Energy Co., Ltd., Huizhou, Guangdong 516006 (CN)
(72) Inventor: YANG, Qing, Huizhou, Guangdong 516006 (CN)
(74) Representative: Berggren Oy
(86) International application number: PCT/CN2024/080588
(87) International publication number: WO 2025/123507

(57) **Abstract**

The application provides a connection bar, a battery module, and a battery pack. The connection bar includes a main body portion and at least one welding portion. A thickness of the welding portion is less than a thickness of the main body portion. The connection bar can alleviate the technical problem of damage to plastic parts of the battery during a laser welding process.

## Description

The present application claims priority to the Chinese patent application No. 202323444551.0 filed with the China National Intellectual Property Administration (CNIPA) on December 15, 2023, and the entire contents of the application are incorporated herein by reference.

### TECHNICAL FIELD

The present application relates to the field of battery technology, specifically to a connection bar, a battery module, and a battery pack.

### BACKGROUND

A square battery module includes a plurality of batteries connected in series, and the connection bars between the batteries are usually made of aluminum. In related technologies, the connection bars are usually configured as sheet-like bodies with a uniform thickness. To improve the current-carrying capacity of the connection bars, the thickness of the connection bars is usually increased. Moreover, the connection bars are welded to the battery posts using laser welding. To ensure that the laser has sufficient energy to penetrate the connection bar and weld it to the post, high-energy lasers are usually used. However, during the laser welding process, the high energy of the laser can damage plastic parts at the edges of the battery posts, leading to the risk of insulation failure in the battery.

### SUMMARY

The embodiments of the present application provide a connection bar, a battery module, and a battery pack that can alleviate the technical problem of damage to plastic parts of the battery caused by the connection bar during a laser welding process.

First Aspect: The embodiments of the present application provide a connection bar for connecting batteries in series and/or parallel, the connection bar includes a main body portion and at least one welding portion, and a thickness of the welding portion is less than a thickness of the main body portion.

Second Aspect: The embodiments of the present application provide a battery module, the battery module includes a first battery and a second battery disposed adjacent to each other and the aforementioned connection bar, the connection bar connects a positive post of the first battery and a negative post of the second battery.

Third Aspect: The embodiments of the present application provide a battery pack, the battery pack including the aforementioned battery module. Beneficial Effects

The beneficial effects of the present application are:
(1) The present application provides a connection bar by setting the thickness of the welding portion of the connection bar to be less than the thickness of the main body portion, thereby reducing the thickness of the welding portion. Therefore, during the process of welding the welding portion of the connection bar to the battery post, the laser energy required for the welding portion can be reduced, effectively avoiding damage to the insulating plastic parts near the battery post caused by high-energy lasers.
(2) The present application provides a battery module, the battery module including a first battery and a second battery disposed adjacent to each other and the aforementioned connection bar, the connection bar connecting the positive post of the first battery and the negative post of the second battery. By setting the thickness of the welding portion of the connection bar to be less than the thickness of the main body portion, the thickness of the welding portion is reduced. Therefore, during the process of welding the welding portion of the connection bar to the battery post, the laser energy required for the welding portion can be reduced, effectively avoiding damage to the insulating plastic parts near the battery post caused by high-energy lasers.
(3) The present application provides a battery pack, the battery pack including the aforementioned battery module, the battery module including a first battery and a second battery disposed adjacent to each other and the aforementioned connection bar, the connection bar connecting the positive post of the first battery and the negative post of the second battery. By setting the thickness of the welding portion of the connection bar to be less than the thickness of the main body portion, the thickness of the welding portion is reduced. Therefore, during the process of welding the welding portion of the connection bar to the battery post, the laser energy required for the welding portion can be reduced, effectively avoiding damage to the insulating plastic parts near the battery post caused by high-energy lasers.

### BRIEF DESCRIPTION OF THE DRAWINGS

FIG. 1 is a perspective view of the connection bar provided by an embodiment of the present application;
FIG. 2 is a front view of the connection bar provided by an embodiment of the present application;
FIG. 3 is a perspective view of the connection bar from one perspective provided by an embodiment of the present application;
FIG. 4 is a perspective view of the connection bar from another perspective provided by an embodiment of the present application;
FIG. 5 is a cross-sectional view of the connection bar provided by an embodiment of the present application;
FIG. 6 is an enlarged view of part A in FIG. 5;
FIG. 7 is an enlarged view of part B in FIG. 5;
FIG. 8 is a perspective view of the copper-aluminum composite bar from one perspective provided by another embodiment of the present application;
FIG. 9 is an exploded view of the copper-aluminum composite bar provided by another embodiment of the present application;
FIG. 10 is a perspective view of the copper bar provided by another embodiment of the present application;
FIG. 11 is a front view of the copper bar provided by another embodiment of the present application;

### Reference Numerals:

100, connection bar;
10, aluminum bar; 11, main body portion; 111, first main body portion; 112, second main body portion; 113, third main body portion; 12, welding portion; 121, first welding portion; 122, second welding portion; 131, first surface; 132, second surface; 141, first arch bridge portion; 142, second arch bridge portion; 143, third arch bridge portion; 15, bending portion; 151, first bending portion; 152, second bending portion; 153, third bending portion; 154, first part; 155, second part; 161, first through hole; 162, second through hole; 17, notch;
20, copper bar; 21, base portion; 211, first base portion; 212, second base portion; 22, hollow portion; 221, first hollow portion; 222, second hollow portion; 23, fourth arch bridge portion.

### DETAILED DESCRIPTION

The embodiments of the present application provide a battery module, the battery module including a plurality of batteries arranged in a matrix. The batteries can be cylindrical batteries or square batteries, and the batteries are arranged in series, parallel, or a combination thereof to meet the capacity requirements of the battery module.

Taking a square battery module as an example, the batteries are arranged side by side along a first direction to form a battery group, and the battery groups are arranged in parallel along a second direction to form a single-layer battery module. The battery module can be a single-layer battery module or a double-layer battery module. Among the battery groups arranged side by side along the first direction, multiple sets of first batteries and second batteries are disposed adjacently.

Each battery includes a casing, a winding core assembly wound in the inner cavity of the casing, and a top cover assembly for covering the open end of the casing. The winding core assembly includes a positive electrode sheet, a negative electrode sheet, and a separator arranged between the positive electrode sheet and the negative electrode sheet. The top cover assembly includes a cover plate and positive and negative posts fixed at intervals on the cover plate. The top cover assembly also includes two insulating plastic parts fixed on the cover plate, with the positive post fixed in one of the insulating plastic parts and the negative post fixed in the other insulating plastic part.

The battery module also includes a connection bar 100, and a first battery and a second battery, disposed adjacently, are connected in series through the connection bar 100. One side of the connection bar 100 is connected to the positive post of the first battery or the second battery, and the other side of the connection bar 100 is connected to the negative post of the second battery or the first battery. Furthermore, the connection bar 100 is fixed to the battery posts by laser welding.

The connection bar 100 can also be configured to connect at least two batteries in parallel.

In related technologies, the connection bar 100 is usually configured as a sheet-like body with a uniform thickness. During the laser welding process, the high energy of the laser can damage the insulating plastic parts at the edges of the battery posts, leading to the risk of insulation failure in the battery.

The connection bar 100 used for connecting square batteries in series is usually made of aluminum bar 10. The aluminum bar 10 needs to meet the requirements of current-carrying capacity, and the current-carrying capacity of the aluminum bar 10 is related to its design dimensions. The length and width of the aluminum bar 10 are usually designed according to the specifications of the battery, so there are limits to the design of the length and width of the aluminum bar 10. Therefore, the requirement for current-carrying capacity can only be met by increasing a thickness of the aluminum bar 10. To meet the current-carrying capacity requirements, the thickness of the aluminum bar 10 cannot be less than 1.5mm, and to avoid high energy in laser welding, the thickness of the aluminum bar 10 cannot exceed 1.5mm.

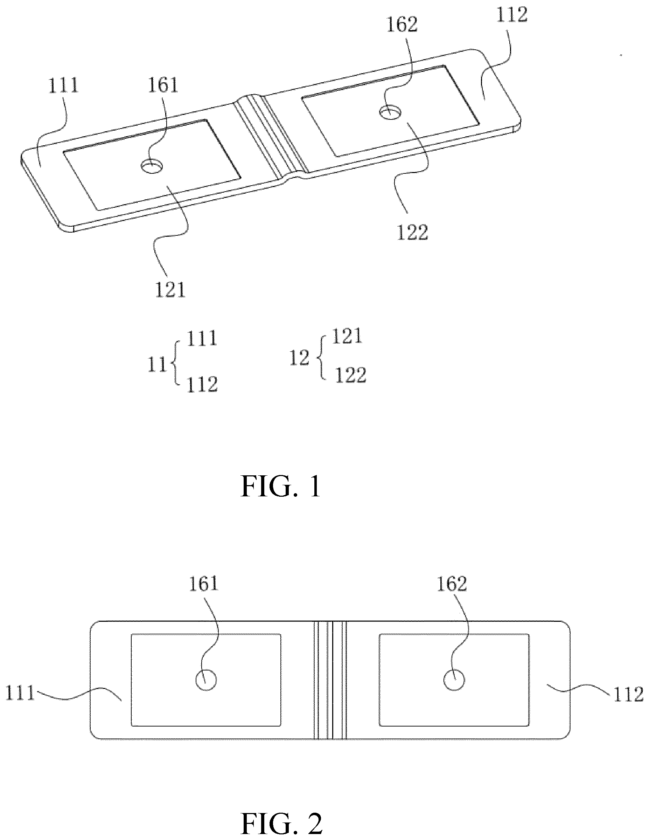

To prevent the insulating plastic parts of the battery from being melted by the laser during the process of laser welding the connection bar 100 to the battery posts, and also to meet the current-carrying capacity requirements of the connection bar 100, the structure of the connection bar 100 is optimized in the embodiments of the present application. Specifically, as shown in FIGs. 1 to 6, the connection bar 100 includes a main body portion 11 and at least one welding portion 12, and a thickness d2 of the welding portion 12 is less than a thickness d1 of the main body portion 11.

It should be noted that the thickness d1 of the main body portion 11 and the thickness d2 of the welding portion 12 are both set as the thickness extending along the thickness direction of the connection bar 100, where the thickness direction of the connection bar 100 is set perpendicular to the current flow direction of the connection bar 100.

The welding portion 12 of the connection bar 100 is used for welding to the battery posts. Since the thickness d2 of the welding portion 12 is less than the thickness d1 of the main body portion 11, on one hand, the laser welding process can use relatively less energy to weld the welding portion 12, thereby avoiding damage to the insulating plastic parts of the battery caused by high-energy lasers. On the other hand, since the thickness d2 of the welding portion 12 is less than the thickness d1 of the main body portion 11, the welding portion 12 forms a groove area relative to the main body portion 11, which facilitates precise welding of the laser welding device to the groove area where the welding portion 12 is located, thereby avoiding damage to areas outside the welding portion 12 by the laser.

The thickness d1 of the main body portion 11 is greater than the thickness d2 of the welding portion 12. By increasing the thickness d1 of the main body portion 11, the current-carrying capacity of the connection bar 100 is enhanced to meet the current-carrying capacity requirements of the connection bar 100.

Furthermore, a reduced thickness of the welding portion 12 relative to the main body portion 11 accounts for 10% to 40% of the thickness d1 of the main body portion 11. In one example, the reduced thickness of the welding portion 12 relative to the main body portion 11 accounts for 40% of the thickness d1 of the main body portion 11. For instance, the thickness d1 of the main body portion 11 is 2.5mm, the thickness d2 of the welding portion 12 is 1.5mm, and the reduced thickness of the main body portion 11 relative to the welding portion 12 is 1mm. In other alternative examples, the reduced thickness of the welding portion 12 relative to the main body portion 11 accounts for 15%, 20%, 25%, 30%, 35%, and values between any two of the above percentages of the thickness d1 of the main body portion 11.

Furthermore, in some embodiments provided by the present application, the thickness d1 of the main body portion 11 is not less than 1.5mm, and the thickness d2 of the welding portion 12 is less than 1.5mm. For example, the thickness d1 of the main body portion 11 can be 2.0mm, 2.5mm, 3.0mm, 3.5mm, 4.0mm, 4.5mm, 5.0mm, 5.5mm, and values between any two of the above, and the thickness d2 of the welding portion 12 can be 0.5mm, 0.6mm, 0.7mm, 0.8mm, 0.9mm, 1.0mm, 1.1mm, 1.2mm, 1.3mm, 1.4mm, and values between any two of the above.

The connection bar 100 is configured as a sheet-like structure, including a first surface 131 and a second surface 132 disposed opposite to each other. The welding portion 12 is configured to form a groove by recessing inward from the first surface 131. During the laser welding process, the second surface 132 of the welding portion 12 abuts against the positive or negative post of the battery, and the side of the groove area of the welding portion 12 is used for laser irradiation. The main body portion 11 abuts against the insulating plastic parts of the battery. The laser irradiates the groove area, and the energy of the laser penetrates the welding portion 12 to weld the part of the second surface 132 of the welding portion 12 that is in contact with the positive or negative post of the battery, thereby avoiding damage to the insulating plastic parts by the laser.

In some embodiments, the connection bar 100 also includes a thickened structure connected to the main body portion 11, and the thickened structure is at least partially staggered from the welding portion 12.

It should be noted that the sum of the thickness of the thickened structure and the thickness of the main body portion 11 is greater than the thickness of the main body portion 11, where the thickness of the thickened structure is also set as the thickness extending along the thickness direction of the connection bar 100, and the thickness direction of the connection bar 100 is perpendicular to the current flow direction of the connection bar 100.

Providing a thickened structure on the connection bar 100 can further enhance the current-carrying capacity of the connection bar 100.

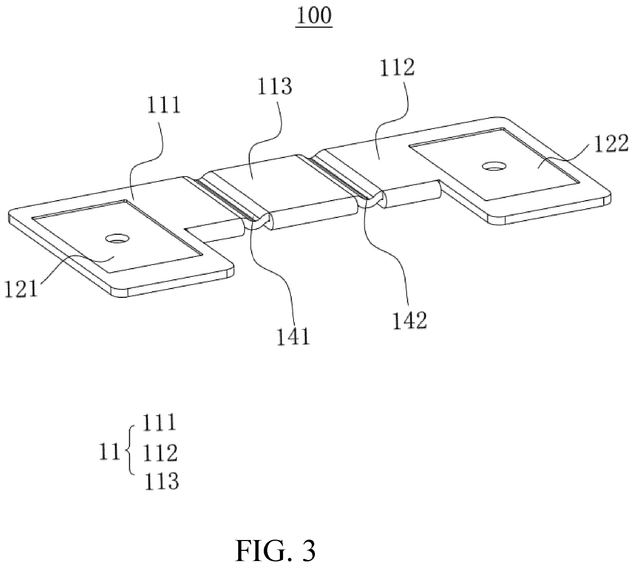

In one embodiment provided by the present application, as shown in FIGs. 3 to 7, the connection bar 100 includes an aluminum bar 10 including the main body portion 11 and the welding portion 12. The thickened structure is integrally formed with the main body portion 11, and the thickened structure includes a bending portion 15 formed by bending at least a part of the main body portion 11, or the thickened structure can also be a protruding structure provided on the main body portion 11. By providing the protruding structure, the thickness of the main body portion 11 is increased, thereby increasing the current-carrying capacity of the connection bar 100.

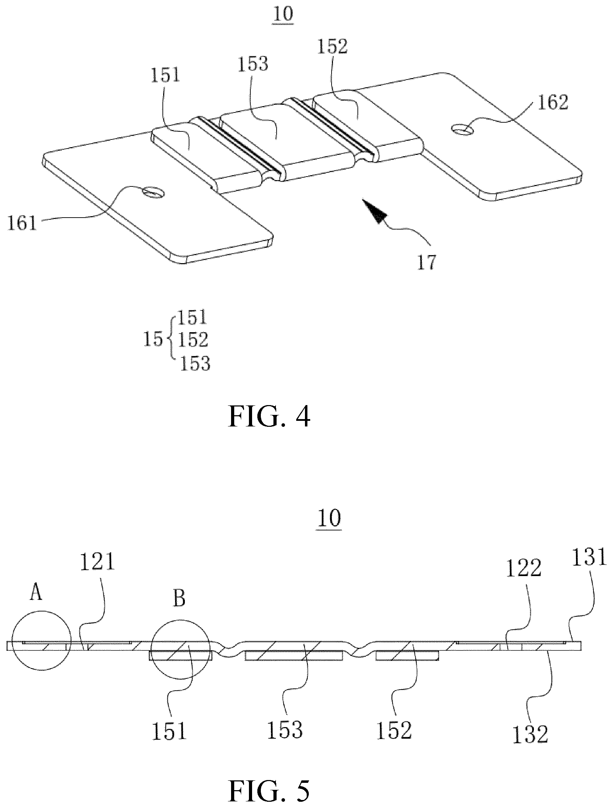

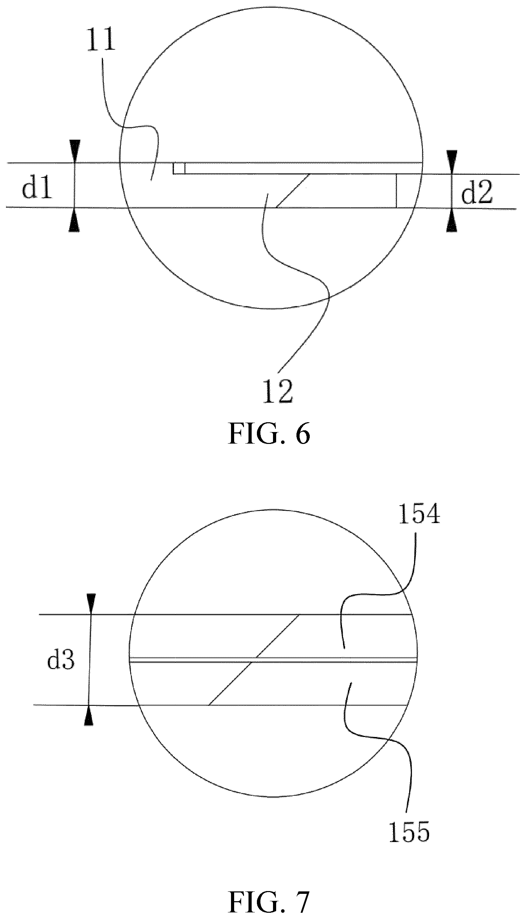

Taking the thickened structure including the bending portion 15 formed by bending at least a part of the main body portion 11 as an example, as shown in FIGs. 5 and 7, the bending portion 15 includes a first part 154 and a second part 155 that are stacked together. The thickness d3 of the bending portion 15 is equal to the sum of the thickness of the first part 154 and the thickness of the second part 155. Therefore, a thickness of the bending portion 15 is greater than a thickness of the non-bending part of the main body portion 11, and the thickness of the bending portion 15 is twice the thickness of the non-bending part of the main body portion 11.

As shown in FIG. 4, the connection bar 100 is also provided with a notch 17 adjacent to the bending portion 15. The notch 17 is configured to be formed after the bending portion 15 is bent, and the notch 17 is configured to avoid the mounting structures or other battery structures of the first battery and the second battery. By partially bending the main body portion 11 to form the avoidance notch 17, the current-carrying capacity of the partially bent connection bar 100 is substantially the same as that of the non-bent connection bar 100. It can be understood that although the cross-sectional area of the area where the bending portion 15 is located is reduced, the thickness of the area where the bending portion 15 is located is increased, and the area yielded after bending the bending portion 15 forms the avoidance notch 17, thereby preventing the cross-sectional area of the connection bar 100 from being too large and interfering with other structural components on the battery.

As shown in FIGs. 1 and 2, the main body portion 11 includes a first main body portion 111 and a second main body portion 112. The aluminum bar 10 also includes a first arch bridge portion 141 configured to connect the first main body portion 111 and the second main body portion 112. One end of the first arch bridge portion 141 is connected to the first main body portion 111, and the other end of the first arch bridge portion 141 is connected to the second main body portion 112. The welding portion 12 includes a first welding portion 121 and a second welding portion 122. The first welding portion 121 is located on the first main body portion 111, and the first main body portion 111 is configured to surround the first welding portion 121. The second welding portion 122 is located on the second main body portion 112, and the second main body portion 112 is configured to surround the second welding portion 122.

The first main body portion 111 is connected to the first battery, the first welding portion 121 is welded to the positive post of the first battery, the second main body portion 112 is connected to the second battery, and the second welding portion 122 is welded to the negative post of the second battery. The first arch bridge portion 141 is located between the first battery and the second battery, thereby effectively buffering the relative displacement between the first battery and the second battery caused by battery expansion or vehicle vibration.

The welding portion 12 is further provided with a through-hole structure configured for positioning with the battery posts. A first through-hole 161 is defined in the first welding portion 121, and a second through-hole 162 is defined in the second welding portion 122. The first through-hole 161 is aligned with the top blind hole of the positive post of the first battery, and the vision system recognizes it to achieve positioning of the connection bar. The second through-hole 162 is aligned with the top blind hole of the negative post of the second battery, and the vision system recognizes it to achieve positioning of the connection bar, preventing welding to areas other than the battery posts, which could lead to welding defects such as explosion or false welding in the welding area of the connection bar.

As shown in FIG. 3, the main body portion 11 also includes a third main body portion 113 located between the first main body portion 111 and the second main body portion 112. The connection bar 100 includes a first arch bridge portion 141 and a second arch bridge portion 142. The first arch bridge portion 141 is configured to connect the first main body portion 111 and the third main body portion 113, and the second arch bridge portion 142 is configured to connect the third main body portion 113 and the second main body portion 112.

Adding an additional arch bridge portion structure further enhances the deformation capability of the connection bar 100, thereby effectively buffering the relative displacement between the first battery and the second battery caused by battery expansion or vehicle vibration.

Further referring to FIGs. 3 and 4, the connection bar 100 includes a first bending portion 151 located on the first main body portion 111, a second bending portion 152 located on the second main body portion 112, and a third bending portion 153 located on the third main body portion 113. The first bending portion 151 is disposed close to the first arch bridge portion 141, the second bending portion 152 is disposed close to the first arch bridge portion 141 or the second arch bridge portion 142, and the third bending portion 153 is disposed close to the second arch bridge portion 142.

The first bending portion 151 on the first main body portion 111 has a greater thickness relative to the area where the non-bending portion of the first main body portion 111 is located, the second bending portion 152 on the second main body portion 112 has a greater thickness relative to the area where the non-bending portion of the second main body portion 112 is located, and the entire third main body portion 113 is configured as a bending structure. By providing the bending structure on the connection bar 100, while maintaining the current-carrying capacity of the connection bar 100, it can also avoid interference between the connection bar 100 and other structural components of the battery. For example, the thickness of the non-bending part of the first main body portion 111 of the connection bar 100 is 2.0mm, the thickness of the first welding portion 121 is 1.5mm, the thickness of the first bending portion is 4.0mm, the thickness of the non-bending part of the second main body portion 112 is 2.0mm, the thickness of the second welding portion 122 is 1.5mm, the thickness of the second bending portion is 4.0mm, and the entire third main body portion 113 is configured as the third bending portion 153 with a thickness of 4.0mm, thereby effectively enhancing the current-carrying capacity of the connection bar 100.

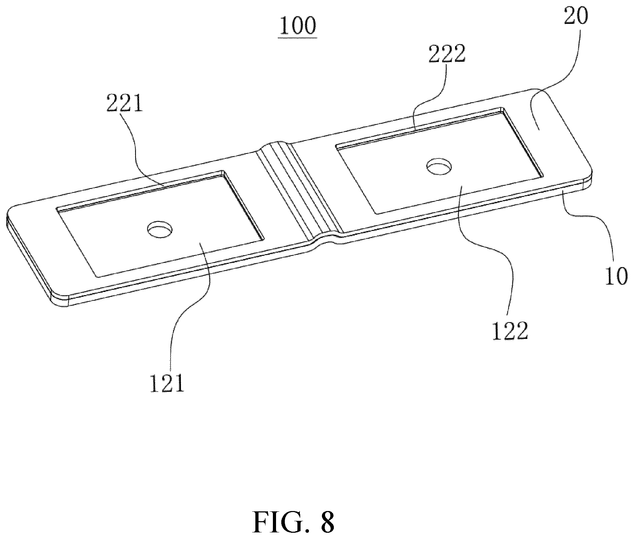

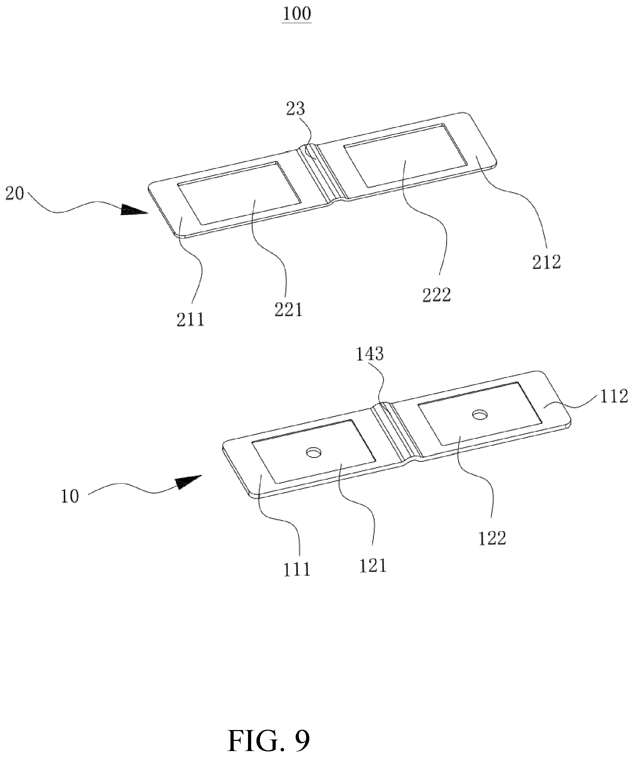

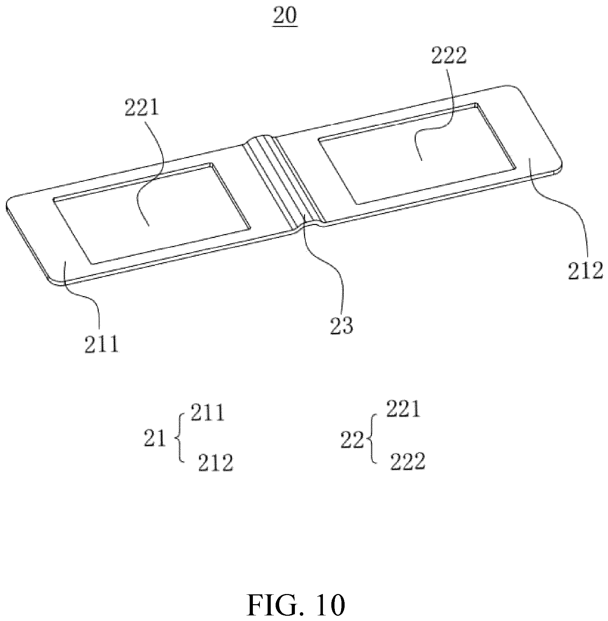

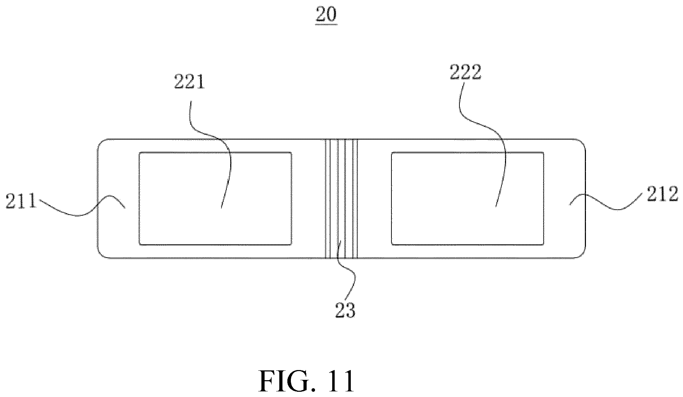

Referring to FIGs. 8 to 11, in another embodiment provided by the present application, the thickened structure of the connection bar 100 is disposed separately from the main body portion 11 of the connection bar 100, and the thickened structure is stacked on the main body portion 11.

Specifically, the connection bar 100 includes a first metal bar and a second metal bar, the first metal bar includes an aluminum bar 10, and the second metal bar includes a copper bar 20. A conductivity of copper is approximately 58.5× 10⁶ S/m, and a conductivity of aluminum is approximately 37.7×10⁶ S/m. Since the conductivity of the copper bar 20 is greater than that of the aluminum bar 10, the current-carrying capacity of the connection bar 100 is effectively enhanced.

The copper bar 20 includes a base portion 21 and a hollow portion 22, and an orthographic projection of the welding portion 12 on the copper bar 20 is located within the hollow portion 22.

Furthermore, the aluminum bar 10 includes a first main body portion 111, a second main body portion 112, and a third arch bridge portion 143 for connecting the first main body portion 111 and the second main body portion 112. A first welding portion 121 is disposed on the first main body portion 111, and a second welding portion 122 is disposed on the second main body portion 112.

The copper bar 20 includes a first base portion 211, a second base portion 212, and a fourth arch bridge portion 23 connecting the first base portion 211 and the second base portion 212. A first hollow portion 221 is disposed on the first base portion 211, and a second hollow portion 222 is disposed on the second base portion 212. An orthographic projection of the first base portion 211 on the aluminum bar 10 coincides with the first main body portion 111, so that the first base portion 211 fits with the first main body portion 111. An orthographic projection of the first hollow portion 221 on the aluminum bar 10 coincides with the first welding portion 121, so that the first hollow portion 221 corresponds to the first welding portion 121. An orthographic projection of the second base portion 212 on the aluminum bar 10 coincides with the second main body portion 112, so that the second base portion 212 fits with the second main body portion 112. An orthographic projection of the second hollow portion 222 on the aluminum bar 10 coincides with the second welding portion 122, so that the second hollow portion 222 corresponds to the second welding portion 122. An orthographic projection of the fourth arch bridge portion 23 on the aluminum bar 10 coincides with the first arch bridge portion 141, so that the fourth arch bridge portion 23 fits with the third arch bridge portion 143.

In one example, both the first welding portion 121 and the second welding portion 122 are configured as grooves with a square cross-section, and correspondingly, both the first hollow portion 221 and the second hollow portion 222 are configured as square holes.

The thickness d1 of the main body portion 11 of the aluminum bar 10 is 2.0mm, the thickness d2 of the welding portion 12 of the aluminum bar 10 is 1.5mm, and the thickness of the copper bar 20 can be adaptively designed according to the current-carrying capacity required by the connection bar 100. When the connection bar 100 requires a larger current-carrying capacity, the thickness of the copper bar 20 is increased, and when the current-carrying capacity required by the connection bar 100 is smaller, the thickness of the copper bar can be reduced accordingly.

The embodiments of the present application also provide a battery pack including a box and a plurality of battery modules disposed inside the box. The battery modules are arranged in series, parallel, or a combination thereof to meet the usage requirements of the battery pack. The battery pack is used in electrical equipment or in power tools.

## Claims

1. A connection bar (100) for connecting batteries in series and/or parallel, the connection bar (100) comprising a main body portion (11) and at least one welding portion (12), wherein a thickness of the welding portion (12) is less than a thickness of the main body portion (11).

2. The connection bar (100) according to claim 1, wherein a reduced thickness of the welding portion (12) relative to the thickness of the main body portion (11) accounts for 10% to 40% of the thickness of the main body portion (11); and/or
the thickness of the main body portion (11) is not less than 1.5mm, and the thickness of the welding portion (12) is less than 1.5mm.

3. The connection bar (100) according to any one of claims 1 to 2, further comprising a thickened structure, wherein a total thickness of the thickened structure and the main body portion is greater than the thickness of the main body portion, the thickened structure is connected to the main body portion (11), and the thickened structure is at least partially staggered from the welding portion (12).

4. The connection bar (100) according to claim 3, wherein the thickened structure is integrally disposed with the main body portion (11), and the thickened structure comprises a bending portion (15) formed by bending a part of the main body portion (11); and/or the thickened structure comprises a protrusion on the main body portion (11).

5. The connection bar (100) according to claim 4, wherein the connection bar (100) is further provided with a notch (17), the notch (17) is adjacent to the bending portion (15), and the notch (17) is configured to be formed after the bending portion (15) is bent.

6. The connection bar (100) according to claim 4, wherein the main body portion (11) comprises a first main body portion (111), a second main body portion (112), and a third main body portion (113) located between the first main body portion (111) and the second main body portion (112), the welding portion (12) comprises a first welding portion (121) and a second welding portion (122), the first welding portion (121) is located on the first main body portion (111), the second welding portion (122) is located on the second main body portion (112), and a first arch bridge portion (141) is connected between the first main body portion (111) and the third main body portion (113); and/or a second arch bridge portion (142) is connected between the second main body portion (112) and the third main body portion (113).

7. The connection bar (100) according to claim 6, wherein the bending portion (15) comprises a first bending portion (151) located on the first main body portion (111), a second bending portion (152) located on the second main body portion (112), and a third bending portion (153) located on the third main body portion (113), wherein the first bending portion (151) is disposed close to the first arch bridge portion (141), the third bending portion (153) is disposed between the first arch bridge portion (141) and the second arch bridge portion (142), and the second bending portion (152) is disposed close to the second arch bridge portion (142).

8. The connection bar (100) according to claim 3, wherein the thickened structure is disposed separately from the main body portion (11), and the thickened structure is stacked on the main body portion (11).

9. The connection bar (100) according to claim 8, wherein the connection bar (100) comprises a first metal bar and a second metal bar, the first metal bar comprises the main body portion (11) and the welding portion (12), the thickened structure comprises the second metal bar, the second metal bar is bonded to the first metal bar, the second metal bar comprises a base portion (21) and a hollow portion (22), and an orthographic projection of the welding portion (12) on the second metal bar is located within the hollow portion (22).

10. The connection bar (100) according to claim 9, wherein a conductivity of the second metal bar is greater than a conductivity of the first metal bar.

11. The connection bar (100) according to claim 10, wherein the first metal bar is set as an aluminum bar (10), and the second metal bar is set as a copper bar (20).

12. The connection bar (100) according to claim 9, wherein the first metal bar comprises a first main body portion (111), a second main body portion (112), and a third arch bridge portion (143) for connecting the first main body portion (111) and the second main body portion (112).

13. The connection bar (100) according to claim 12, wherein the second metal bar comprises a first base portion (211), a second base portion (212), and a fourth arch bridge portion (23) connecting the first base portion (211) and the second base portion (212), the first base portion (211) fits with the first main body portion (111), the fourth arch bridge portion (23) fits with the third arch bridge portion (143), and the second base portion (212) fits with the second main body portion (112).

14. The connection bar (100) according to any one of claims 1 to 2, wherein the main body portion (11) and the welding portion (12) are integrally disposed with each other.

15. A battery module, the battery module comprising a first battery and a second battery disposed adjacent to each other and the connection bar (100) according to any one of claims 1 to 14, wherein the connection bar (100) connects a positive post of the first battery and a negative post of the second battery.

16. A battery pack, the battery pack comprising a box and a battery module disposed inside the box, wherein the battery module comprises the battery module according to claim 15.
